# EUROPEAN PATENT SPECIFICATION

(11) **EP 1 958 857 B1**
(45) Date of publication and mention of the grant of the patent: **22.06.2011**
(21) Application number: 08157590.4
(22) Date of filing: 23.03.2006
(51) Int. Cl.: B62J 7/04

(54) **Mounting base**
Aufbauplatte
Embase de montage

(30) Priority: 24.03.2005 EP 05006609
(43) Date of publication of application: 20.08.2008
(62) Divisional of application: 06727355.7
(73) Proprietor: HAMAX AS, 1679 Krakeroy (NO)
(72) Inventor: Hoidal, Dag, 1675 Krakeroy (DE); Eskild, Asbjorn, 1675 Krakeroy (NO); Hermansen, Leif, 1684 Vesteroy (NO)
(74) Representative: Popp, Eugen

(56) References cited:
- EP-A- 0 887 250
- DE-A1- 4 434 542
- DE-A1- 19 717 570
- DE-U1- 9 402 459
- DE-U1- 29 819 331
- JP-A- 2001 354 178
- US-A- 4 501 384
- US-A- 5 575 443
- US-A1- 2002 011 745

## Description

The current invention relates to a mounting base which is provided for a carrier rack of a two wheeled vehicle, in particular a bicycle.

### Background to the Invention

Carrying racks, or simply carriers, for cycles are well known in the art for attachment to the cycle frame so as to allow the user of the bike to carry items of luggage without having to use their hands. Further, it is known for such carriers to be adapted so that further specific carrying elements, such as a child's seat for instance, can be attached to the base carrier. Most carriers that are adapted for attachment to the cycle over the rear wheel are possessed of three supports: two which extend to a fixing point either side of the rear wheel, and which are designed to take the weight of the carrier and items in transit, with a third which is provided for stabilising motion of the carrier around these two fixing points. These supports attach the actual carrier top to the frame of the cycle, wherein the carrier top is commonly of the form of a base made from a rigid plastic or a tubular frame, to which elements of luggage can be attached using ropes, straps, string or the like.

Most designs of carrier, however, are directed toward permanent fixture to the cycle. Whilst this can be acceptable to some users, there are occasions where it is desirable to remove the carrier from the bike. This is perhaps the case when the carrier is to be used with a so called mountain bike, wherein many users enjoy using the cycle in "off road" conditions, for instance on dirt tracks in the countryside or through woodland. In such situations, it is desirable to remove the carrier from the cycle as it adds unnecessary weight and also poses the risk of being caught on vegetation which could lead to either carrier damage or in more serious situations, the user crashing the cycle.

It is an object of the current invent:ion, therefore, to provide a mounting base for attachment to the carrier of a cycle in such a manner that it can readily be removed without the requirement of general or specialised tools. Furthermore, it is desired that such a mounting base be quickly and easily attachable to or detachable from the cycle carrier. Finally, it is preferable that the mounting base be readily adjustable, such that it can easily be adapted for a wide range of carrier designs, again without the use of tools.

US 5,803,329 discusses a carrier which is intended for use on a cycle, and which is possessed of a fixing mechanism which does not require the use of tools. Herein, the mounting points either side of the rear wheel are provided by nuts permanently affixed to the cycle frame. These nuts are possessed of two partial shoulders which extend radially outward at the side of the nut removed from the cycle frame, to provide two lugs.. These are designed to interact with appropriately shaped cut outs at the bottom end of the carrier supports, such that the carrier is rotated 90° back from its normal position and the provided cut outs are guided over the nuts and lugs. The carrier is then rotated into its normal position so that the cut outs in the carrier supports and the lugs on the nuts are out: of alignment and the carrier is fixed in position. Finally, the carrier is fixed to the seat stem by use of a third connector which fixes around the tubing.

DE 197 17 570 is considered to be the closest prior art and discloses the preamble of claim 1.

### Summary of the Invention

The present invention provides an apparatus in accordance with independent claim 1. Further preferred embodiments are given in the dependent claims.

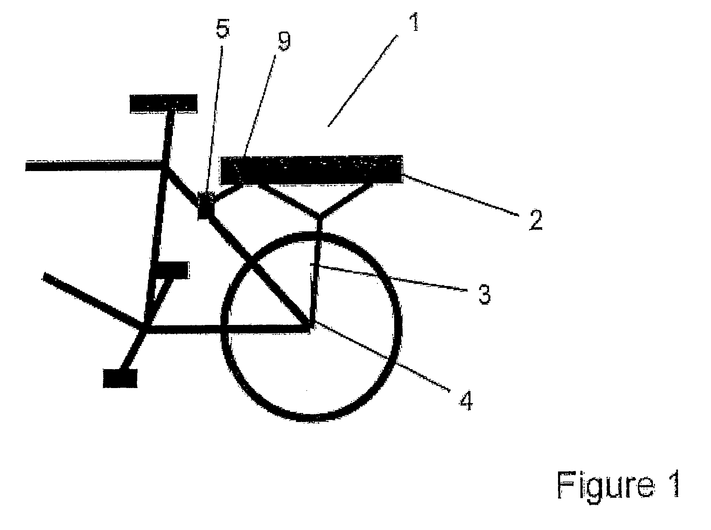

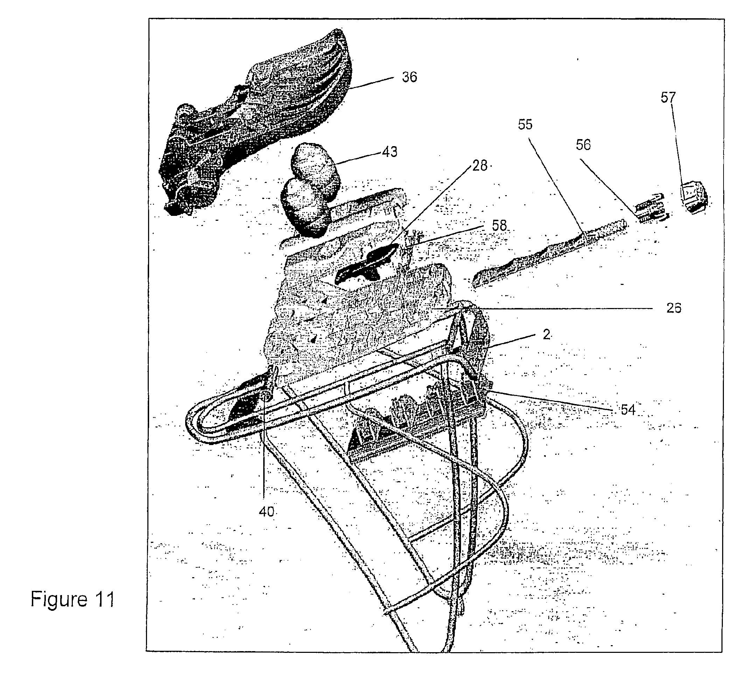

The claimed invention can be better understood in view of the embodiments described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention per se. This also holds for the subsequent "Description of the Figures" as well as the "Description of the Preferred Embodiment". Indeed, it is noted that the claims generally refer to the subject matter of figures 1 and 11, and associated descriptions. The remainder of the application is provided for technical background.

### Description of the Figures

**Figure 1** demonstrates a carrier attached to the frame of a bicycle.
**Figure 2** details an expanded view of the mounting members and rear axle connector.
**Figure 3** shows the front connector in expanded form.
**Figure 4** is an exploded diagram of the carrier, showing the carrier top.
**Figure 5** shows a carrier top with an integrated wire frame.
**Figure 6** details the carrier top with seat base adapter..
**Figure 7** illustrates the seat base with wedge securing pieces and a hand operated cam wheel.
**Figure 8** is a cross section through the seat base engaged with the carrier top.
**Figure 9** shows the seat base and cradle with suspension, in exploded form.
**Figure 10** is an exploded diagram of a further rear axle mounting mechanism.
**Figure 11** details a carrier showing a seat base, in which the seat base is held to the carrier by means of a moveable joint piece.
**Figure 12** shows the integration of a tyre pump with a carrier.
**Figure 13** details a removable light affixable to the rear of a carrier
**Figure 14** is an exploded diagram showing a further front connecting mechanism for a cycle carrier.

### Description of an Embodiment

With reference to figure 1, a carrier (1) for a bicycle is shown attached over the rear wheel of a bicycle The bicycle carrier (1) comprises a carrier top (2), which can either be used as it appears in the figure as a simple bicycle carrier (1), or it can be integrated with further components which are described in detail below. Attached to this carrier top (2) in a removable manner, are one or more supporting members (3) which extend from the carrier top (2) to mounting points (4) provided on the cycle frame for supporting the carrier (1) and load. The mounting points (4) are positioned in the close vicinity of the rear axle of the bicycle, as is shown in figure 1, and are designed to be fixed to the bicycle and left in place when the carrier (1) is not being used.

It is envisioned, that the mounting points (4) will be fixed to the frame of the bicycle using either a screw or a nut and bolt arrangement, utilising an eyelet in the bicycle frame provided for the connection of cycle carriers. Should no such connection point exist, it is a straightforward matter to drill a hole of suitable size in the frame of the bicycle, at the point which extends around the rear wheel axle to fix the wheel to the frame. It is further possible, that the mounting point (4) be integrated with the axle of the rear wheel, and be positioned around the axle between the hub of the rear wheel and the inner side of the frame.

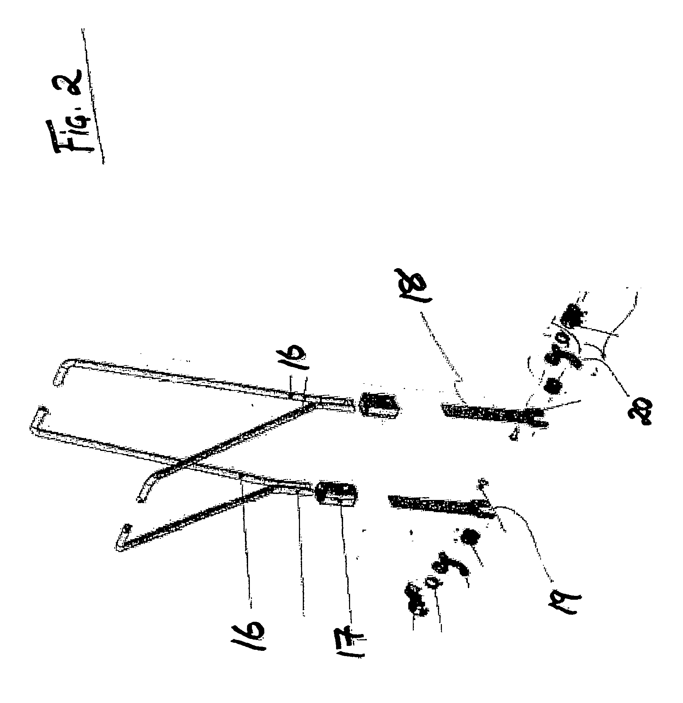

In order for the cycle carrier (1) to be readily attached and removed from the cycle frame, the rear mounting points (4) provide a pin for interacting with the lower end of the supporting members (3), this is best seen in figure 2. The lower end of the supporting members (3), are provided with slots (19) which are designed to accommodate the pin of the mounting points (4). When fitting the carrier (1) to the bicycle, all that is required to ensure a secure load bearing connection, is to slide the slots (19) at the end of the supporting members (3) over the pins provided by the mounting points (4). As a modification to the mounting points (4), and so as to stop sideways movement of the supporting members (3) from disengagement with the pin, the mounting points (4) can be provided by mushroom connectors. These mushroom connectors are cylindrical in shape, and are provided with a bore which extends through, the central axis of the connector to be used for fixing to the bicycle. The outer surface of the connector varies in diameter along its length in a step wise manner, so that at either end of the connector the diameter is greater than in the middle. This, therefore, provides a connector which has an "H" profile, wherein the slots (19) at the end of the supporting members (3) are designed to fit within the region of reduced diameter and thereby be prevented from slipping off the mounting point (4).

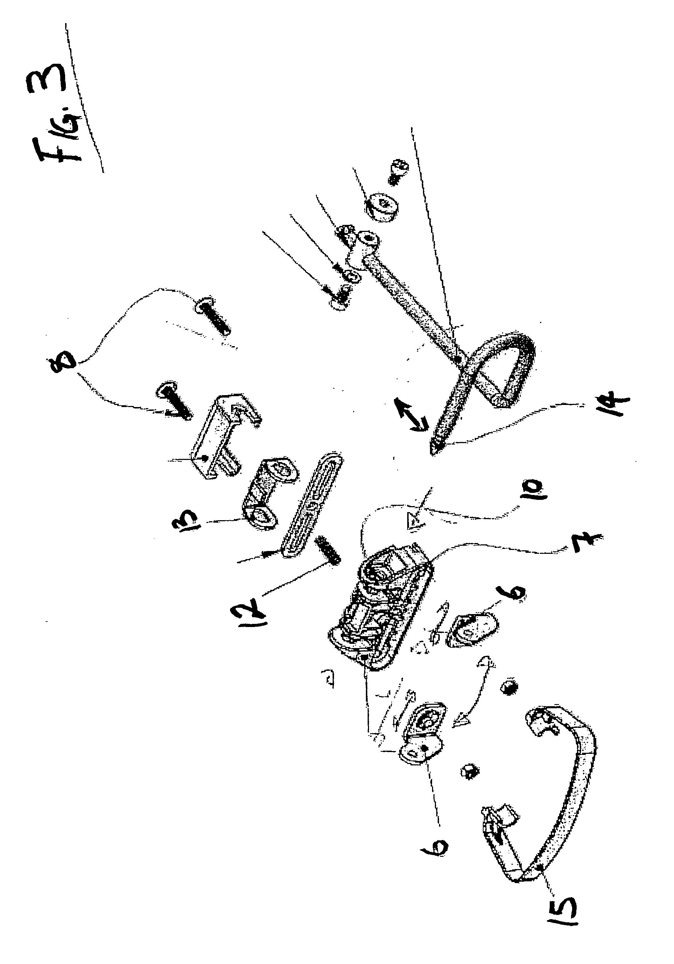

To further fix the carrier (1) to the frame of the cycle, there is provided a front connector (5) which is positioned at a point forward of the mounting points (4). This front fixing point is designed and provided to stop rotation of the carrier (1) around the rear axle mounting points (4). On possible design for the front connector (5) can be most clearly seen in figure 3, which shows an expanded view of the key components of the connector (5). As with the rear axle mounting points (4), this front connector (5) is intended to be semi-permanently fitted to the frame of the cycle, and left in place when the rest of the carrier (1) has been removed. Shown in figure 3, are two brackets (6) which are provided to fix the front connector (5) to carrier fixing points provided on the rear wheel forks of most cycles. Shown in the diagram are L-shaped brackets, although it is to be understood that the brackets (6) are not limited to these, and can be changed for simple plate brackets depending upon the fixing points on the cycle. The fixing brackets (6) are adjustably attached to the front connector (5) to accommodate a variety of widths in the bicycle side fixing points. As can be seen in figure 3, two slots (7) are provided passing through the body of the front connector (5) through which bolts (8) are passed for engaging with the fixing brackets (6) at the desired spacing.

As shown in figure 1, the carrier (1) is attached to the front connector (5) by means of an adjustable securing rod (9). This rod (9) is fixable at one end to the carrier top (2) in a removable and adjustable manner, so that the carrier can be used with a variety of bicycle designs and shapes. At the carrier top (2) the securing rod (9) either engages with one of a plurality of fixing points which allow it to be rotationally secured, or with a track which runs along the length of the carrier top (2) to which the rod (9) is clamped, again allowing for rotation of the rod (9) to accommodate different cycle flame designs. The securing rod (9) is engaged with the front connector (5) via a bore (10), which passes through the body of the connector (5). This bore (10) passes through the connector (5) in a direction which is substantially perpendicular to that between the carrier (1) and the front connector (5). In this manner, it is only required for the rod (9) to be bent into a configuration that will allow one end to slide into the bore (10) with the other being attached to the carrier top (2), so as to fully secure the carrier (1) and stop it from rotating around the rear axle mounting points (4).

For increased security in the above described fixing between the rod (9) and the front connector (5), a locking mechanism is provided. As is shown in figure 3, this locking mechanism is in the form of a button (11), which is biased by means of a spring (12). The actual locking mechanism is formed by a plate (13) which has 2 right angle bends in it, wherein the two opposing faces of this plate (13) are positioned within the connector and cross the path of the bore (10). Two holes are provided in these opposing faces in appropriate positions, so that when the plate (13) is fully engaged within the front connector (5) these holes align with the bore (10). Under the influence of the spring (12), however, the plate (13) is pushed out: of the connector (5) body, and the holes on the plate become misaligned with the bore (10). As is shown in the figures, if the end of the rod (9) engaging with the front connector (5) is provided with a groove (14) toward its end, the edge of one of the holes in the biased plate will slot into this groove (14), when the rod is fully within the connector. Indeed, as the bote (10) is accessible from both sides, it is necessary to provide the locking mechanism working with both orientations of the rod (9); this is achieved by use of the plate (13) crossing the bore (10) in two positions. This provides an additional security feature in that, whilst the rod (9) is being inserted into the bore (10), the groove (14) will engage with the first side of the plate (13) and will therefore be stopped from slipping out again. Pressing of' the button (11), will then allow the groove (14) to be disengaged from the holes in the plate (13) and the end of the rod (9) can be fully inserted within the bore (10). Clearly, the above double locking mechanism works in reverse: should the rod (9) become dislodged from the hole in the first side of the plate (13) and slide outward of the front connector (5), the groove (14) will be engaged with the second side of the plate, and will therefore be retained.

In order to facilitate sliding the rod (9) into the bore (10) for engagement, it is possible to chamfer the relevant end, or even provide it with a point.

As can be seen in figure 3, the front connector further includes a safety strap (15). This strap (15) is attached to the front connector (5) via the bolts (8), and is designed to pass around the back of the frame of the bicycle to which the connector (5) is attached. In this way, should the fixing mechanism holding the front connector (5) to the frame fail, the front connector (5) will still remain fixed to the frame and will not allow the carrier (1) to rotate or become unattached. Whilst the diagram has shown this safety strap (15) connected through the bolts (8) used for adjusting the width of the fixing brackets (6), any other method of securing the strap (15) to the front connector (5) around the frame is believed as being considered obvious by the skilled man and falling within the scope of the design. For instance, the strap (15) could be attached to the connector (5), and when the connector (5) is fixed to the frame the strap (15) is passed around the frame and the two ends are connected together, by means of a buckle or a clip, for instance.

As can be seen from figure 3, a modification to the design of the fixing rod (9), includes it having multiple bends. This design is particularly useful, as it further allows for the carrier (1) to be fastened to a wider range of' cycles. The rod (9) in fashioned is such a manner, that the direction of the central axis at each end of the rod (9) lies perpendicular to each other, which therefore allows one end to fasten to the carrier top (2) with the other being engaged in the front connector (5). Secondly, these two axes do not lie in the same plane as each other and are separated by a chosen distance. In this manner, when the rod (9) is inserted into the bore (10) of the front connector (5), by choosing which side to insert from, the height of' the rod (9) can be adjusted. This adjustment is designed to allow for different frame designs, wherein the relationship between the front connector (5) frame attachment points and the height of' the carrier top (2) above the rear wheel differs.

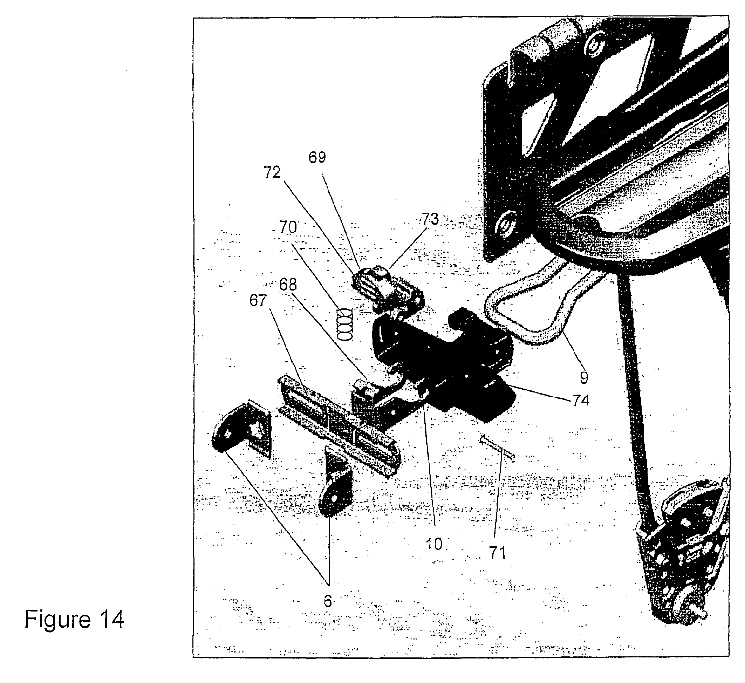

Figure 14, shows another front fixing mechanism (5) for securing the front of the carrier (1) to the cycle. As in the above case, there is provided a unit for semi-permanent fixture to the cycle. As is detailed above, the figure shows "L-shaped" fixing brackets (6) for attachment to relevant points of the cycle frame. The same connectors as those detailed in relation to figure 3 can be used, and so no further discussion will be presented. Attachable to the brackets (6) is a fixing plate (67), made from a rigid and durable material, preferably steel. This plate has two elongate slots, through which screws or bolts (not shown) are intended to pass in order to affix this plate to the brackets (6). The slots are provided, so as to allow the connector to be fixed to a plurality of cycles, wherein the fixing points on the cycle can be a variety of widths apart. Attached to the fixing plate (67), is a rigid hook assembly (68), preferably formed from metal. It is this hook (68) which provides a securing channel (10) and interacts with the securing rod (9) attached to the carrier (1), and which attaches the front of' the carrier (1) to the frame of the cycle.

Shown in figure 14, is a securing rod (9) which is shaped in a continuous loop. Whilst this is a preferred shape for interacting with this embodiment of the front securing mechanism, the bent rod as disclosed above and in figure 3 could work equally well. It is clear that the loop end of the rod (9) slots into the hook or channel (10) region of the hook assembly (68), and thereby secures the front of the carrier (1) to the frame of the cycle. In order to further increase the security of this attachment, a safety knob (69) is provided within the fixing assembly. Preferably, this safety knob (69) is biased via a spring (70), to block the exit path from the hooks in the hook assembly (68). The safety knob (69) is rotatable around an axis point, the axle being provided by the pin (71). In use, the securing rod (9) is pressed into an appropriately shaped slot recess in the top of the safety knob (69), such that the knob (69) rotates about its axis point. In rotating, the knob (69) allows access to the hook regions of the hook assembly (68), and the end or loop of the rod (9) can pass and become secured. With removal of the force from the rod (9), the safety knob (69) rotates under the spring bias to close off the access way from the hooks portion of the assembly (68). In order to remove the securing rod (9), the safety knob (69) must be rotated, such that the open portions of the hooks is freed.

As a further security feature, the operation of the safety knob (69) may be locked in the closed position, such that there is no chance of' the mechanism accidentally opening if the cycle is on rough terrain. This additional locking method is by way of a snap extension which is positioned at the bottom of a push surface (72), which clips over the fixing plate (67). The spring (70) is chosen, such that it possesses the strength to achieve this. In order to open the safety knob (69), the user must squeeze the push surface (72) and a release lever (73) which is formed on the carrier side of the safety knob (69). Squeezing these two together, creates enough lift for the snap clip to disengage from behind the fixing plate (67) and allow the rotation and opening of the safety knob (69). In order to protect the workings of the above mentioned securing mechanism, there may be provided a cover piece (74), made from a rigid, preferably plastic, material. A safety strap (15) could be utilised with this front: connector, as is described in relation to the design in figure 3.

In order to allow the carrier (1) to be fixed to a variety of cycles, the length of the supporting members (3) attached to the carrier top (2) can be varied. This is most simply achieved by the system as shown in figure 2. Herein, two sets of rods (16) are shown which extend from the carrier top (2) to a height adjusting block (17), to be held within. Whilst the diagram shows four rods grouped in pairs, it is to be understood that this is by way of example only, and that more or fewer can be used if so requited. Furthermore, whilst it is envisioned that these rods be made from aluminium for both lightness and strength, it is clearly possible to fabricate them out of a different metal or indeed a rigid plastic. The rods (16) are designed to interact with the carrier top (2) and fasten thereto in a removable manner, and are shown in the figures attached to the underside of the top (2). Other designs, however, which fulfil the same function are clearly possible, and that shown in the figure is intended as one possible solution.

The height adjusting block (17), to which the lower end of the support rods (16) are attached, further interacts with a height plate (18), which has at: its lower end the slot (19) for sliding over the rear mounting point (4). The height plate (18) comprises a rigid plate of metal which has a series of holes spaced out along its length, such that when the slot (19) is in position around the rear mounting point (4) the holes extend in an upward direction. The height adjusting block (17) is possessed of a slot which is sized to accept the height plate (18); further, the block (17) is provided with a fixing pin which engages with the desired hole, and thus positions the adjusting block (17) at the desired height.

Whilst the engagement of the slot (19) in the height plate (18) over the rear mounting point (4) is a straightforward method of attaching the rear of the carrier (1) to the frame of the bike, it requires a locking mechanism to stop the motion of the bike from bouncing the carrier (1) out of the mount (4). This is most readily achieved by providing a clip (20) at the end of the height plate (18), for sliding underneath and around the rear mounting pin (4), and in this way securing the plate (18). Such a clip (20) would be affixed in a rotatable manner to the end of the height plate (18), on one of the arms either side of the slot (19). Once the height plate (18) is engaged with the rear mounting point (4), the clip (20) can be rotated from its open position allowing access to the slot (19) to the closed position, wherein it passes under the rear mount (4) and stops the height plate (18) from disengaging as a result of the motion of the cycle. As an additional feature, it is possible to bias this clip (20) by means of a spring (21), thereby ensuring that the clip is always engaged with the rear mounting point (4), and as such increasing the security of the locking mechanism. Moreover, to maintain this clip (20) assembly in good working order, and avoid its degradation from either physical knocks or from dirt and/or oil, a protective cap (22) can be provided to cover the clip (20) and spring (21).

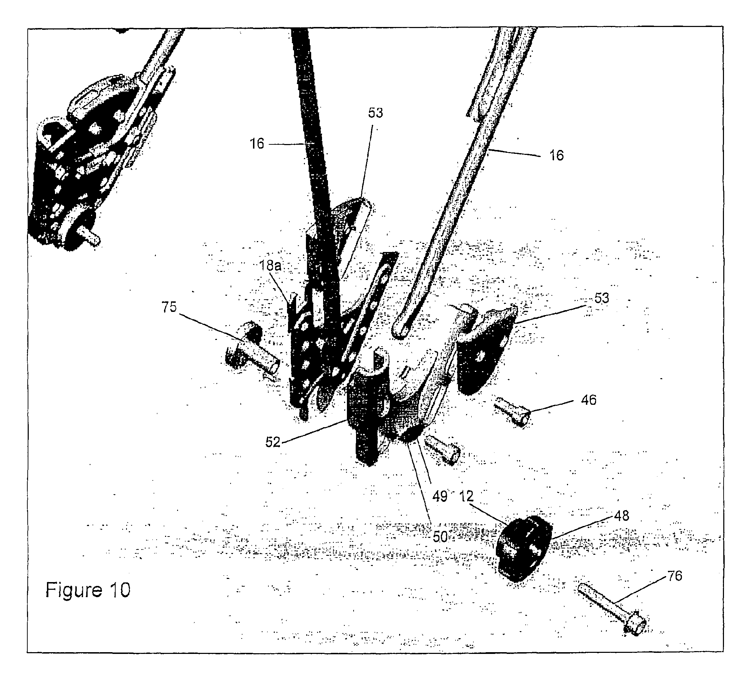

An additional mechanism for securing the slot (19) associated with the support rods (16) with the rear axle mounts (4), is shown in figure 10. This figure also shows a further mechanism for attaching the support rods (16) to a height plate (18a). In this figure the rear axle mount (4a) is constructed in a slightly different manner from that disclosed above. Here, the mounting to the cycle is performed by 2 pieces: a bolt (76) and a mushroom pin (75). The mushroom pin (75) has a central extending cylinder with a flat head at one end.. The cylindrical section is hollow in construction, and possessed of a thread on the inner side, this thread is designed to interact with the external thread of the bolt, and fix the mounting to the frame of the cycle The exterior surface of the cylindrical section of the mushroom pin (75), also possesses a thread as will be described below.

The height plate (18a) of this embodiment, is constructed of a durable, rigid material, preferably metallic in nature. Unlike in the previous embodiment, wherein the support rods (16) interact with the height plate (18) via an adjusting block (17), here they are shown attaching directly with the height plate (18a) via the use of fixing means (46). Of course, it is to be understood, that the further fixing features of the design shown in figure 10, can be implemented using the height plate (18) and block (17) described in figure 2. The fixing means (46) can comprise any suitable means, such as a bolt or screw, and they pass through fixing holes (47) positioned at the bottom of the support rods, to fasten with the height adjustment holes provided on the height adjustment plate (18a). In the figure, two support rods (16) are shown attaching to a substantially "V" shaped plate (18a), however, it is to be understood that this system works equally well with a carrier (1) provided with only one support rod (16)

As with the previous height adjustment plate (18), the plate (18a) of this embodiment may be provided with a slot (19) for sliding over and fixing with the rear axle mount (4), or the slot (19) may be replaced by a hole. In this embodiment, the mechanism of securing the height adjustment plate (18a) with the rear axle mount (4) differs from that of the clip (20) disclosed above. As can be seen in figure 10, also provided in the reduced diameter region of the rear axle mount (4) is a barbed knob (48). This knob (48) has a hole running through its rotational centre in which there is a screw thread. This hole and thread are designed to threadably engage with the external surface thread of the cylindrical part of the mushroom pin (75) of the rear axle mount (4a). When the slot (19) of the height plate (18a) is positioned over the cylindrical portion of the rear mount (4a), the barbed knob (48) is rotated so as to grip the height plate (18a) with the flat head of the mushroom pin (75) by means of' the interacting screw threads. If the height plate (18a) is possessed of a hole, the cylindrical part: of the mushroom pin (75) is passed through the hole, and the barbed knob (48) is then threadably engaged with the mushroom pin (75)

As a further security measure, to stop the knob (48) from unscrewing during motion of the cycle, there may be provided a push button (49). This push button (49) has a lower edge (50) which is sized and shaped so as to receive a portion of the outer surface of the barbed knob (48) which lies between adjacent barbs (51) This push button interlocks with the knob (48), such that the lower edge (50) stops the rotation of the knob (48) by blocking the passage of the barbs (51). Preferably, the push button (49) is biased by a spring, which keeps it in the locking position. In order to rotate the knob (48) to both tighten and loosen the grip on the height plate (18a), the button (49) must be pushed and the lower edge (50) removed from the path of the barbs (51).

Additionally shown in figure 10 is a cover (52), preferably made from an appropriate plastic, which may be provided to fit over the ends of the support rods (16) and is releasably fixed to the height plate (18a). This cover (52), is preferably provided with holes through it, which allow external access to the fixing means (46). A further optional feature which is shown in figure 10, is that of the fastening clip (53) for attachment of a strap (not shown). This strap, preferably elastic in nature, is intended for positioning over the top of the carrier (1) and attaching to a similar clip (53) on the other mounting apparatus on the other side of the cycle axle. Such a strap, is optionally provided for securing items to the carrier (1) during transit.

Whilst the two rear axle fixing mechanisms have been described separately, it is to be understood that features from each of figures 2 and 10 can readily be interchanged to provide a rear axle fixing system for the bike carrier (1).

The above disclosed arrangements for attaching the carrier (1) to a cycle, means that one carrier (1) can be used with a range of cycles, This is particularly desirable when multiple users, say within a family, wish to use just one carrier (1) Provision of multiple front connectors (5) and rear axle mounts (4) attached to several cycles, in addition to the above disclosed adjustable support members (3) and securing rod (9), leads to a carrier (1) which can readily be moved from one cycle to another.

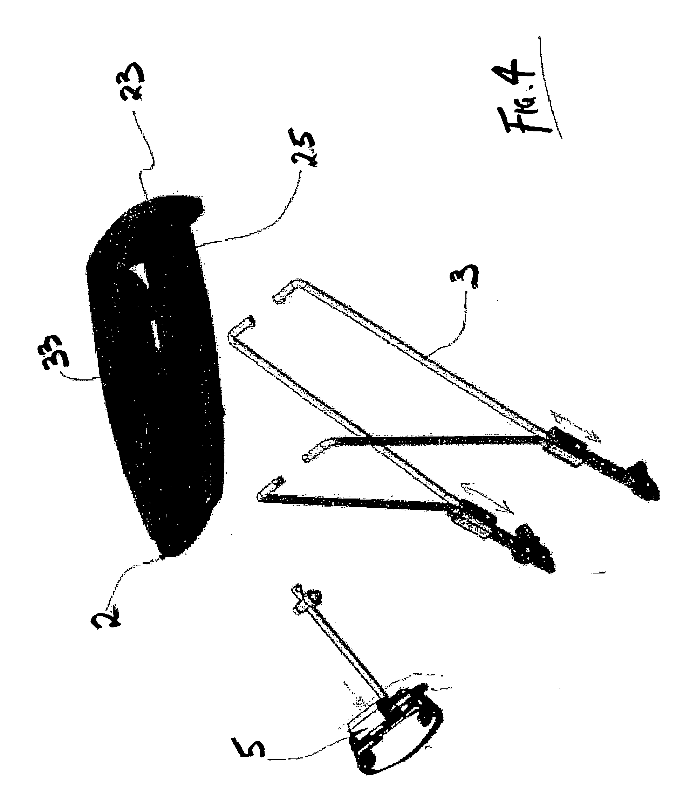

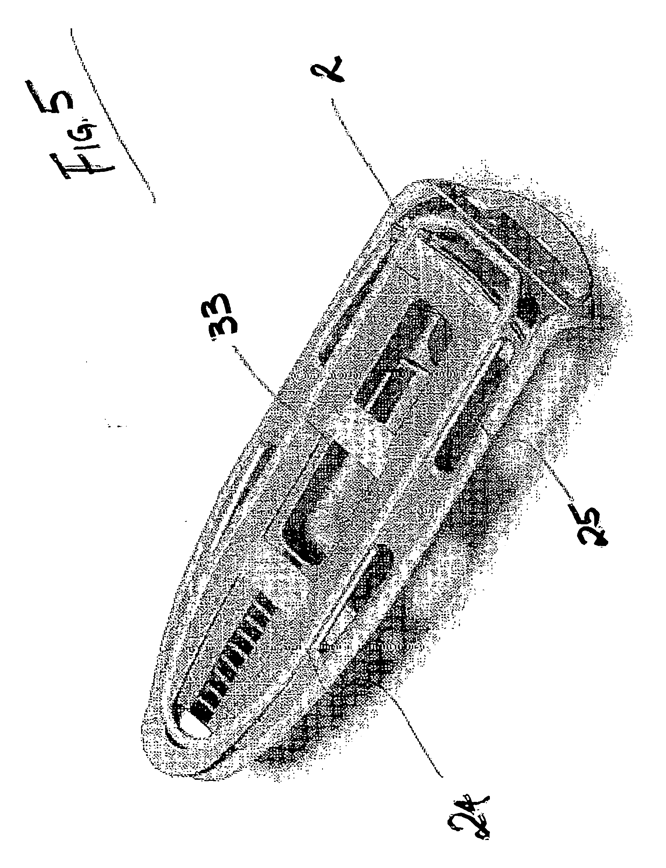

Figure 4 is an exploded diagram detailing how the carrier top (2), the front connector (5) and the supporting members (3) are disposed to make the basis of the carrier (1). As shown in this figure, the preferred number of supporting members (3), each of which comprises a pair of rods (16), is two, that is: one either side of the rear wheel. Further provided on the carrier top (2) is one half of a dovetail joint (23), for the secure connection of further carrier elements as detailed below. Shown in figure 4, is a carrier top (2) which is fully formed as a single unit, preferably out of a rigid plastic material, in which the half dovetail joint (23) is positioned toward the outer edge of the top (2). Another possible method of providing one half of a joint for attachment of further carrier elements, is shown in figure 5, wherein a rigid wire (24) is situated above the carrier top (2) upper surface in a loop. This rigid wire loop (24) provides a fixing point which can be treated as one half of a dovetail joint, as in the case where the carrier top (2) is formulated from a single unit. The loop can also be used for attaching items to the carrier in the same way as the slots (25), which can be seen in figures 4 and 5, passing through the carrier top (2), securing the items by means of straps, rope, string or the like.

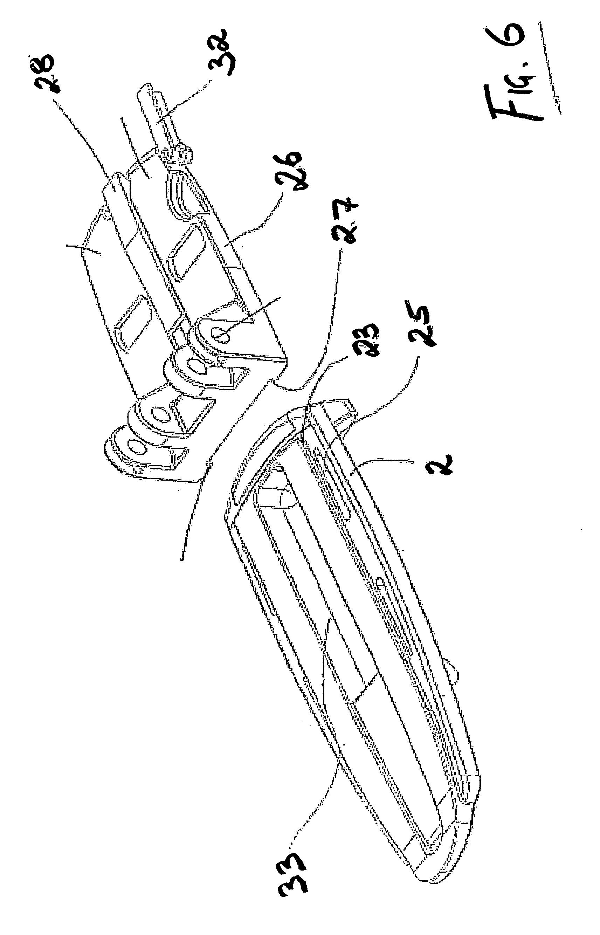

The half dovetail joint in the carrier top (23), is specifically intended for interfacing the carrier top (2) with further elements of the carrier (1); figure 6 shows one such element in the form of a seat base (26). Further elements which could interface with the carrier top (2) is the manner described below, include a basket or box or the like. The term seat base (26) is merely used throughout for simplicity and is intended to cover each of the above options. This seat base (26) is designed such that its underside has a half dovetail joint (27) which is the matching half of the carrier top dovetail joint (23). Attachment of the seat base (26) to the carrier (1), is by the simple sliding of the seat base (26) over the carrier top (2) such that the two halves of the joint engage. In the case that the carrier top (2) has a wire loop for the attachment of the seat base (26), the seat base (26) slides over this for attachment. Whilst the figures show the carrier top (2) being possessed of the tenon to the joint, in the case of the wire loop carrier (24) the seat base (26) has the mortise which slides over and around the loop, it is equally possible for these to be reversed. In this situation, the carrier top (2) has a dovetail shaped recess into which a tenon on the seat base (26) can slide; the wire loop carrier (24) is adapted so that the seat base tenon slides between the two sides of the loop to engage therewith

The dovetail joint between the carrier top (2, 24) and seat base (2.6) clearly stops the two elements from disengaging vertically, but there remains the possibility of the base (26) sliding off from the carrier (2). In order to obviate this problem, the seat base (26) can be fitted with at least one hand operable locking mechanism. Two solutions for this locking system are presented: a mechanism for causing the two halves of the dovetail joint to be gripped together so as to remove any play from the joint and stop the sliding disengagement; and a rotatable safety lock (28) which is connected to the seat base (26), and has projections that extend below the bottom of the seat base (26) to interact with the carrier top (2, 24). It is conceived that one or both of the above locking systems be fitted to the carrier (1), although with a well fitting dovetail joint (23, 27) it is possible that neither would be necessary.

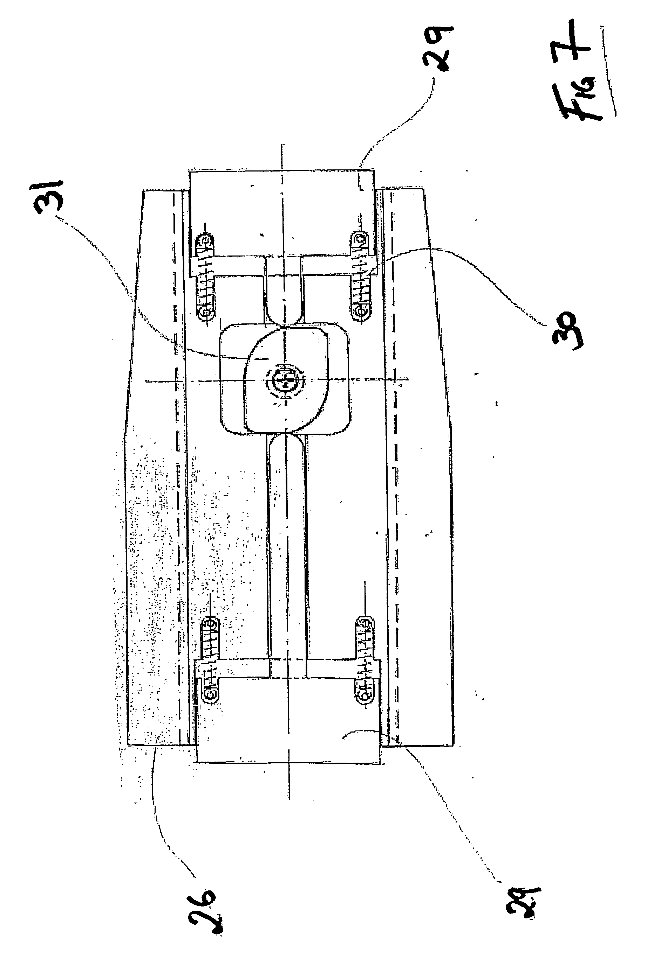

Several solutions exist for removing the play from the dovetail joint, either the two halves are forced apart vertically, so that the tenon is forced into tight engagement with the mortise, or the seat base (26) is formed such that it can be deformed slightly and act so as to grip the carrier top (2, 24), or the rods of the loop carrier (24) can be moved to grip the seat base (26). The method of forcing the two halves of the joint apart, is best achieved by providing 2 wedges (29), see figure 7, which fit within the dovetail joint in between the seat base (26) and the carrier top (2). These wedges (29) are biased, with the aid of springs (30), pulling them together toward the centre of the carrier top (26). The wedges (29) are oriented so that the narrow portions face each other, and when they are pulled together by the biasing springs (30), thicker and thicker portions are introduced into the gap between the two halves of the joint and thus it: is pushed apart and more securely held. In order to remove the wedges (29) from the joint, and allow the seat base (26) to be removed from the carrier top (2), a cam wheel (31) is mounted within the seat base (26) such when it is rotated, it acts upon linear extensions of the wedges (29) and pushes them apart. This cam wheel is provided with a grip and is intended to be hand operated. Clearly, the cam wheel (31) must be in the position that forces the two wedges (29) apart for mounting or removal of the seat base (26) onto the carrier top (2). As the wedges act upon the carrier top (2), this method is particularly suited to the solid carrier top (2), rather than the wire loop top (24).

Secure fixing of the seat base (26) by deformation, requires that this base (26) is formed from a piece of plastic in the shape of a "U"; that is, it has two extending arms which are separated by a small gap. When the seat base (26) is positioned in the carrier top dovetail joint: (23), these two arms are either squeezed together or pushed apart by hand operated means and therefore secure the dovetail joint. Shown in figure 6 is a locking lever (32), which has an extension passing through one of the seat base (26) arms to be secured in the other. This design is appropriate for when the carrier top (2) has the tenon of the dovetail joint, whether provided in the moulded plastic carrier top (2) or the carrier top possessing the rod loop (24), and the seat base (26) the mortise. As the lever (32) has an eccentric mounting point at one end of the extension, when it: is rotated it acts upon the side of the seat base (26) and pushes the first arm toward the second, and in so doing grips the carrier top tenon (23) Whilst in the figure a lever (32) is shown, it is clear that other systems exist, such as a hand operated screw thread, which upon rotation pushes the two arms of the seat base (26) together. Additionally, in the system which employs a wire loop carrier top (24), it is possible to bias the rods outward so as to engage more tightly with the mortise of the seat: base (26) and so secure the joint. This could be achieved by means of a hand operated screw thread, which upon rotation acts to force the rods apart.

When the converse system to that above is utilised, that is where the seat base (26) presents the tenon of the dovetail joint, to either fit within a moulded mortise in the carrier top (2), or within the rods of the carrier (24), a different locking mechanism is required. In this case, it is possible to still utilise the seat base (26) formed as a "U", as detailed above, however, instead of using a system to push the two arms together, the biasing is required to pull the two arms apart and so engage the two halves of the dovetail joint in tight connection. The simplest method of performing this task, is by providing a screw thread which passes through one of' the arms and impinges upon the other. Rotation of the screw in the appropriate direction, will drive the end of the screw into the second arm of the seat base (26) and force the two apart and into tight engagement within the joint. It: is also possible, to have a screw thread engaged with both arms, wherein each half has a thread of opposite thread direction, such that rotation will cause both arms to be forced apart. An additional method of gripping the tenon on the seat base (26) is possible, if the carrier top (24) has the rigid wire loop configuration. Here, when the tenon is engaged between the rods, application of a force to move the rods together will grip the seat base (26) firmly to the carrier top (24). This gripping force could most: readily be achieved by means of screw thread operated clamps attached to each of the rods.

A further mechanism of securing the seat: base (26) with the carrier top (2) and removing the play within the dovetail type joint: can be seen in exploded form in figure 11. In this figure, the carrier (1) is shown to be a wire carrier (1) and the seat base interacts directly with this. This is purely by way of example, and the fixing system works equally well with the solid carrier top (2) in figure 4, and the carrier top (2) with rigid wire fixing means (24), as detailed above in relation to figure 5. In this fixing mechanism, the play in the joint between the seat base (26) and carrier top (2), is removed by means of' joint piece (54). This joint piece (54) forms a separate section which interacts with the underside of the seat base (26), and fits within a recess formed therein.

As can be seen in figure 11, the joint piece (54) is designed such that it can move in and out of the recess formed in the seat base (26). Flanges extending along either side of the joint piece (54) are designed to fit within the mortise of the seat base (26). If a wire frame is being used as the carrier (1), or the carrier top (2) has the rigid wire (24) construction, then the flanges are designed to fit underneath the wire when the seat base (26) is in position. Furthermore, the solid carrier top (2) could be provided with a track comprising two rails running along the length of the top, which provide a gap between their underside and the carrier top (2) top surface, into which the flanges can slide..

The seat base (26) is slid into position with the flanges of the joint piece (54) engaging with whichever fixing mechanism is formed on the carrier top (2). Once in position, the joint piece (54) is brought further within the recess of the seat base (26) and thus the flanges grip the carrier top (2) As seen in figure 11, the joint piece (54) is moved within the seat base recess by means of the wedge screw (55). Wedge screw (55) is formed from an elongate rigid material, which fits within the seat base (26) and has a substantially flat lower base. The upper surface has a varying profile, such that the vertical width of the screw (55), vertical being defined when viewing the carrier (1) from the side, increases and decreases a number of times along the length of the screw (55). The wedge screw (55) is contained within a hole running along the length of the seat base (26) and is free to move in the horizontal plane, in particular in and out of this hole. The flat bottom of the wedge screw (55) resting on a corresponding flat lower side of the hole extending through the seat base (26).

In operation, the joint piece (54) is further possessed of a plurality of extensions on it upper side, which fit with the recess of the seat base (26). These extensions further pass within the region of the longitudinal hole provided for the wedge screw (55). The extensions are provided with holes therein, such that when the joint piece (54) is placed within the recess of the seat base (26) the holes within the extension line up with the hole through the seat base (26) to create a longitudinal passageway for the wedge screw (55).

When in the initial position, the narrow sections of the wedge screw (55) align with the holes in the extensions of the joint piece (54). It is clear then, that movement of the wedge screw (55) in the longitudinal direction, will bring the regions of increased thickness within the holes in the extensions and in so doing cause the joint piece (54) to be brought further within the recess in the seat base (26). This will clearly cause the gap between the flanges of the joint piece (54) and the underside of the seat base (26) to narrow, which will in turn grip the relevant section on the carrier top (2). In this manner, the seat base (26) can be firmly attached to the carrier top (2).

As can be seen in figure 11, the method of moving the wedge screw (55) in and out of the hole in the seat base, is by means of a screw thread portion at one end of the screw (55). This screw thread interacts with a matching nut (56) which has the appropriate internal screw thread. The nut (56) is held within the seat base (26) and is free to rotate within this mounting, The screw thread at the end of the wedge screw (55) is threadably engaged with this nut (56), and therefore rotation of the nut (56) causes the wedge screw (55) to move in and out of the hole through the seat base (26), thereby tightening the grip of' the joint piece (54) with the seat base (26). So that the nut can be rotated more easily, a hand operable screw knob (57) may be attached thereto.

An additional, and optional, security feature can be integrated within this design, for ensuring that the seat base (26) is fully engaged with the carrier top (2) prior to allowing the rotation of the screw knob (57). The security device (58) is provided at the rear end of the seat base (26), that is the end that slides within the carrier top joint last. One or a plurality of tabs protrude from the underside of the seat base (26) when the base (26) is not fully engaged within the carrier top joint. Additional optional tabs can also protrude from the upper side of the seat base (26), so as to provide a visual indication to the operator that the seat base (26) is not fully engaged. Once the seat base (26) is positioned fully within the carrier top joint, the lower tabs are pushed within the base (26) which further causes the visual tabs on the upper side to be retracted. A further feature of this, is that until the lower tabs are retracted, the safety device (58) can stop the rotation of the nut (56) and thereby ensure that the seat base (26) is fully within the carrier top joint prior to attempting to lock the two together.

Whilst the security device (58) is described only in conjunction with seat base (26) according to figure 11, it is clear that as similar feature could be included in designs disclosed above. Each of the seat base (26) designs, could be fitted with the security device (58) so as to alert users of the system when the seat base (26) is not fully engaged with the carrier top joint.

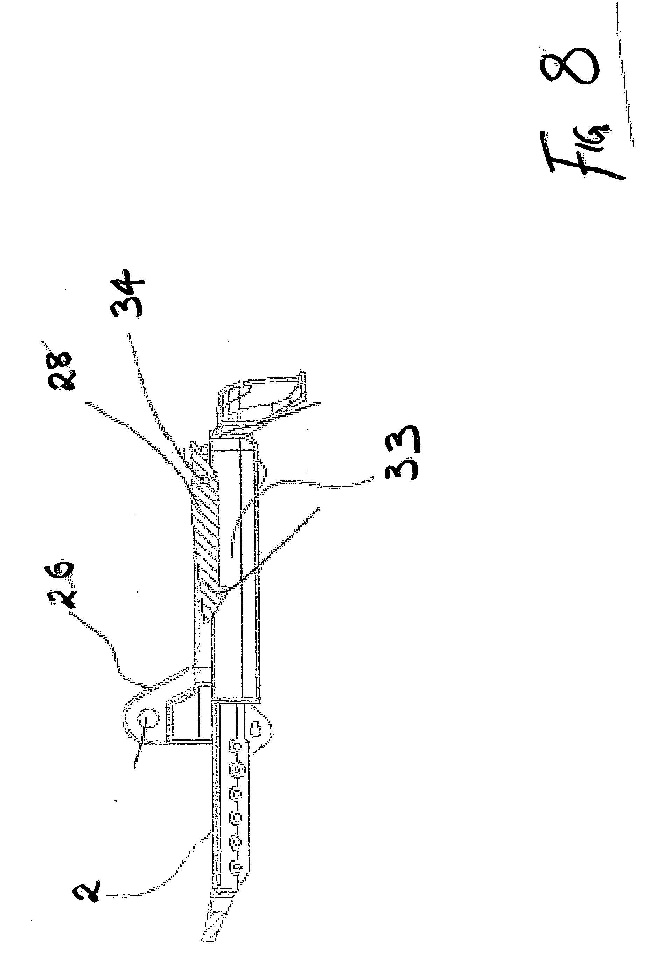

Figure 6 shows the relative positioning of the safety lock (28), if present, within the seat base (26) for further ensuring that it does not accidentally disengage from the carrier top (2, 24). Figure 8, shows a cross section through the engaged carrier top (2) and seat base (26) taken along the line A-A in figure 6. Clearly visible is the projection from the safety lock (28) which extends below the bottom surface of the seat base (26) to engage with a resilient side of a recess (33) in the carrier top (2). This recess (33) can be more clearly seen in figure 6. As the seat base (26) is slid into engagement with the carrier top (2), the safety lock (28) rotates around the pivot point (34) and the projection end rises out of the dovetail joint region, until the recess (33) is reached. At this point, the projection drops down to engage the locking mechanism and prevents the seat base (26) from sliding back and disengaging from the carrier top (2). Whilst it is possible to allow this lock to work under the force of gravity alone, it is preferable to spring bias the rotation of the member to ensure that the lock (28) properly engages, and further prevent the motion of the cycle from bouncing it out of position.

The safety lock (28), if present, can also be positioned to the side of the seat base (26) as shown in figure 11. In this case, the safety lock (28) is provided with a downward facing protrusion, which interacts with a block positioned on the carrier top (2), or wire carrier. Once again, the safety lock (28) is rotatably held within the seat base (26), such that the protrusion can be moved upward and over the block in the carrier top (2) when the seat base (26) is slid in and out of the joint. Whilst gravity can be utilised to keep the safety lock engaged, it is preferred to provide the lock (28) with a spring bias to ensure it remains in position. Preferably also, the protrusion is provided with a front curved edge so that when the seat base (26) is being engaged with the carrier top joint, the sliding motion automatically moves the safety lock (28) up and over the block. Further, the back edge of the protrusion hay have a straight profile such that it forms a resilient locking assembly with the block when engaged. If this lock (28) is also integrated with the safety device (58) as shown in figure 11, it is possible to ensure that the lock (28) engages at the same point that the safety device (58) is disengaged by the carrier top (2).

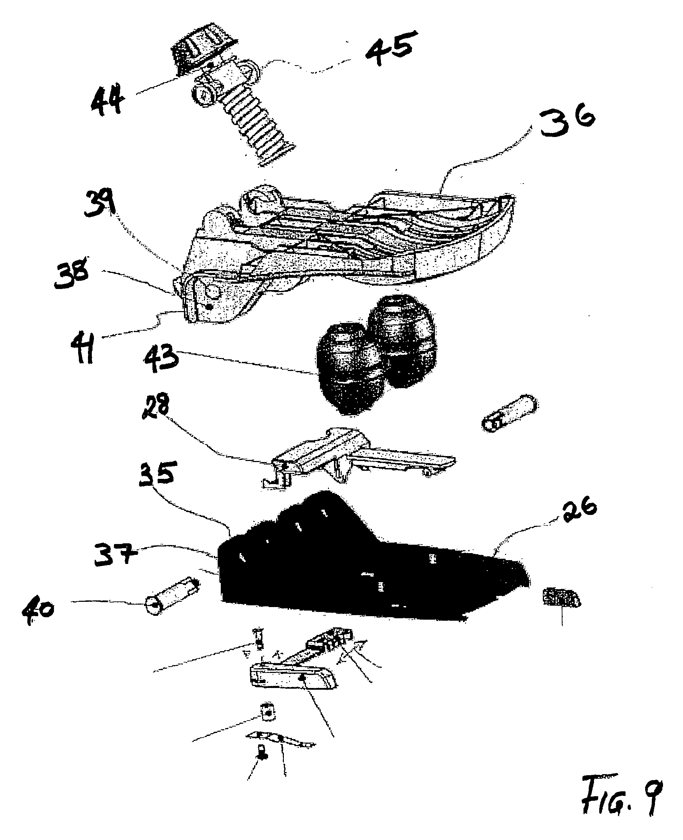

Figure 9 shows the seat base (26) of figure 6 with additional elements of the seat for integration with the carrier (1). As can be seen in the figure, the seat base (26) is possessed of a series of projections (35) extending upward at one end of the base (26). Preferably, these projections (35) are formed such that they are positioned at the front of the carrier (1) when it is fixed to the cycle, although this is not necessary. These projections (35) provide one half of a rotatable hinge for integration of' further seat elements, such as the cradle (36) shown in figure 9. Through the projections (35) in the seat base (26) are a series of holes (37) which each align along a central axis in a direction perpendicular to the direction of motion of the cycle. As can be seen in figure 9, the underside of the cradle (36) is provided with a second set of projections (38) with holes (39) through. The two sets of projections (35, 38) are so designed as to interdigitate with each other such that the sets of holes (37, 39) align and with insertion of a split pin (40) form a hinge. This pin (40) can be formed in many ways, as two halves of a single pin (40) which after insertion into the holes (37, 39) are joined together; or as two shorter pins (40) which fit through half of the interdigitated projections (35, 38) only, and which form into the hinge in this manner. If the two separate pin (40) option is utilised, the inserted end is provided with a deformable section which after insertion through the holes (37, 39), stops the accidental removal of the pin (40) from the hinge.

The provision of a hinge section between the seat base (26) and the cradle (36) is so that a suspension system can be incorporated between these two elements. It is desirable, however, that the cradle (36) cannot rotate too far forward away from the seat base (26), as this could lead to a further element attached to the cradle (36) tipping too far forward, which could prove dangerous. In order to stop this from occurring, the cradle (36) has formed shoulders (41) which match the contour of the seat base projections (35). These shoulders (41) are positioned around the seat base projections (35) and will only allow the cradle (36) to rotate so far away from the seat base (26). As can be seen in figure 9, the cradle unit (40) is provided with attachment points on its upper surface which are used for attachment of further carrier elements Such elements could be, but are not limited to, a child's seat (42) or other carrying units, such as a box.

In order to improve the ride comfort for a child using the child's seat (42), or for reducing the number of potentially content damaging bounces the carrier unit suffers during the use of the cycle, suspension blocks (43) can be placed between the rotateably interconnected seat base (26) and cradle (36). These suspension blocks (43) are preferably made from rubber, as this is a naturally deforming substance with long durability, however, any appropriate elastomeric substance could be used. As a further option, the positioning of these blocks (43) with respect to the hinge point, can be altered so as to adjust the suspension effect. These suspension blocks (43) are either held within specific fixing points provided on the top surface of the seat base (26) and corresponding points on the lower surface of the cradle (36), or a fixing track is provided on each of these carrier elements so as to allow the positioning of the block in a range of places to give a truly variable suspension effect.

Further shown within figure 9, is an adjustment spindle (44), which can further be used to alter the level of travel available between the cradle (36) and the seat base (26). The spindle (44) shown, has a screw thread which is in threaded engagement with a nut (45); this nut (45) being held within the cradle (36). At one end of the spindle (44) is a hand operated grip for rotation of the thread to adjust the position of the spindle (44) with respect to the nut (45), with the other end of the spindle (44) resting on the seat base (26). Clearly, with this arrangement, rotation of the spindle (44) will drive the one end into the seat: base (26) and thereby adjust the amount of rotation which is possible between the cradle (36) and the seat base (26). Whilst a nut (45) is shown in the figure, it: is also possible that the cradle (36) be possessed of' a threaded section for attachment of the spindle (44), thereby removing the need for a separate nut (45).

A further requirement of the spindle (44), is to integrate with the further elements which are attached to the cradle (36), be these the child's seat (42), storage boxes or the like. The hand operated end of the spindle (44) is required to be accessible when the further elements are attached, whilst additionally not getting in the way of the functioning of the elements. A further function that the spindle can perform, is to provide another fixing point between the seat (42) or storage element, and the cradle (36). In order to achieve this, the spindle is housed within the seat (42) or storage element, such that it can be rotated to allow adjustment of the suspension, whilst still connecting the element to the cradle (36).

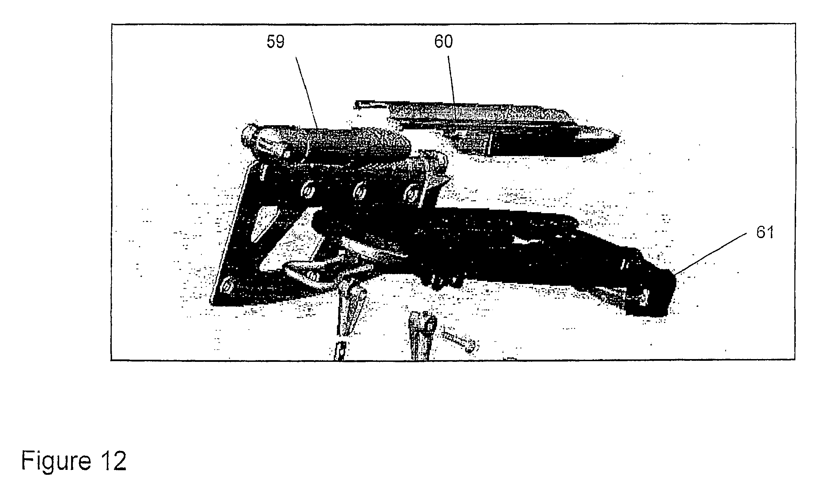

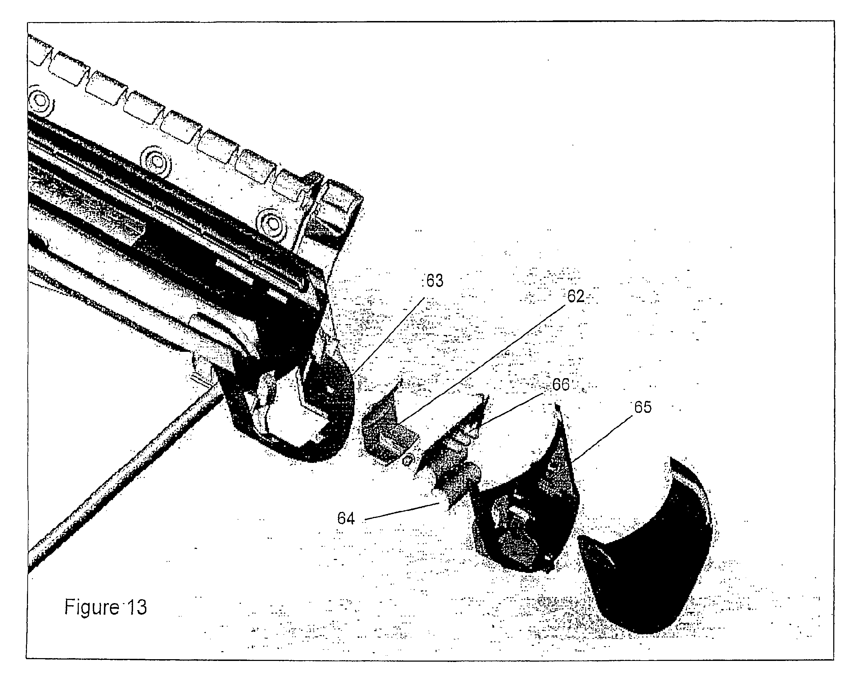

Further features which can optionally be included within the numerous carrier embodiments detailed above, are shown in figures 12 and 13. Figure 12 shows a method of incorporating a bicycle tyre pump (59) with the carrier top (2). Whilst the figure shows that the carrier top (2) is that of the solid design, such a feature can equally well be incorporated within any of the carrier (1) designs detailed above. The pump (59) is shown integrating with a pump housing (60) which is designed to fit within a recess formed in the top of the carrier top (2). As is shown in the figure, the housing (60) is possessed of a removably attachable lid portion. The pump (59) and housing (60) are designed to allow the pump (59) to be held securely within the housing (60), and further for the housing (60) to held securely within the carrier top (2) in a removable manner. It is anticipated that the housing (60) will interact with the carrier top (2) by means of simple clips and slots to hold the housing (60) securely in place. Clearly, it is also possible for the pump (59) to be housed within the carrier top (2) itself, without the need for a full housing module (60). Additionally, the carrier top (2) could have a recess which will securely hold the pump (59), and further an optional lid portion which fits directly on top of the carrier top (2) to cover the pump recess.

Also shown in figure 12, and more clearly seen in figure 13, is an optional light module (61) attachable to the back of the carrier top (2). Figure 13 shows the light module (61) in exploded form, so that each element is visible. This light (61) is designed to integrate fully with the carrier top (2) and be positioned at the rear of the carrier, providing the necessary rear cycle light for when the cycle is used at night or in poor light conditions. Within this unit can be seen a clip (62) for removably attaching the light (61) to the back of the carrier, with this clip (62) interacting with a matching housing (63) in the carrier top (2). Whilst the light here is shown as being battery powered via the battery module (64) and housing (65), the light could be run from a dynamo (not shown). The provision of electrical connectors for connection to a dynamo already integrated with a cycle, could readily be provided. The light is shown powered by multiple LEDs (66), although it is clear that a conventional bulb light could also be provided.

While various features and embodiments of the invention are described above, they can readily be combined with each other resulting in further embodiments of the invention.

## Claims

1. A mounting base (26), in particular a seat base, providing an interface for removable attachment of a seat, basket, box or the like to a cycle carrier (1), wherein the base (26) comprises a joint piece (54) which is moveably attached to the underside of the mounting base (26), the joint piece (54) comprising flanges extending along two opposing sides, and being adapted to slideably engage with rails or rods forming part of the carrier (1), wherein
the joint piece (54) is moveably held in the mounting base (26) such that it can be moved closer to the base (26) to reduce the gap between the flanges and the underside of the base (26),
wherein the joint piece (54) comprises a plurality of extensions on an upper surface thereof, which are adapted to fit within a recess provided on the underside of the base (26), further
a longitudinal hole passes through the mounting base (26) in a direction parallel with the flanges on the joint piece (54), and the extensions on the joint piece (54) further pass through the region of this longitudinal hole when the joint piece (54) is located within the underside recess, and **characterized in that** the extensions have holes which align with the longitudinal hole,
wherein the mounting base (26) further comprises a longitudinal wedge screw (55) which is positioned within the longitudinal hole in the mounting base (26), and aligned holes through the joint piece extensions, wherein
the wedge screw (55) has a substantially flat lower base and a varying profile upper surface, such that the depth/thickness of the screw (55) increases and decreases a number of times along the length of the screw (55).

2. The mounting base (26) of claim 1, wherein the wedge screw (55) further comprises a screw thread at one end, which threadably engages with a nut (56), wherein the nut is rotatably held within the mounting base (26) at the entrance to the longitudinal hole, and wherein
the upper surface of the wedge screw (55) is profiled such that when the screw (55) is within the longitudinal hole and threaded through the holes in the extensions of the joint piece (54), the regions of narrower depth align with each of the holes through the extensions of the joint piece (54), and further
when the wedge screw (55) is moved in the longitudinal hole in a direction parallel with the central axis of the hole, by rotation of the nut (56), regions of thicker depth move within the holes in the extensions of the joint piece (54) and cause the joint piece (54) to move further within the recess on the underside of the mounting base (26).

3. The mounting base (26) of claim 2, wherein a screw knob (57) is attached to the nut (56).

4. The mounting base (26) of any one of claims 1 to 3, wherein the mounting base (26) further comprises a security device (58) at the rear end of the mounting base (26), the security device (58) having a plurality of tabs protruding from the underside of the mounting base (26), wherein the tabs are fastened within the mounting base (26) in a moveable manner, wherein
the security device (58) is adapted to stop the movement of the joint piece (54) within the mounting base (26) whilst the tabs protrude, and to allow the movement of the joint piece within mounting base (26) when the tabs are within the mounting base (26).

5. The mounting base (26) of claim 4 in the version of being dependent upon claim 2, wherein the security device (58) stops the rotation of the nut (56) threadably engaged with the wedge screw (55).

6. The mounting base (26) of either of claims 4 or 5, wherein the security device (58) further has tabs which protrude from the upper surface of the mounting base (26) when the lower tabs protrude, and the upper tabs are adapted to be held within the mounting base (26) when the lower tabs are within the mounting base (26).

7. The mounting base (26) of any of claims 1 to 6, wherein the mounting base (26) is provided with a safety lock (28) which is mounted to the mounting base (26) in a rotatable manner, the safety lock (28) being provided with an extension which passes by the side of, the mounting base (26) to be engaged with a resilient feature on the carrier (1) underneath, in such a manner that the mounting base (26) is prevented from sliding off the carrier (1) without first rotating the safety lock (28) and disengaging the extension from the resilient feature in the carrier (1).

8. The mounting base (26) of claim 7, wherein the safety lock (28) is engagable with a carrier top (2) of the carrier (1) by means of gravity pulling it into position.

9. The mounting base (26) of claim 7, wherein the safety lock (28) is adapted to be biased into the engagement position with a carrier top (2) of the carrier (1), by means of a spring.

10. The mounting base (26) of any one of claims 1 to 9, wherein a plurality of protrusions (35) are provided extending upward from the top side of the mounting base (26), these protrusions (35) being shaped and arranged at one end of the mounting base (26) so as to form one half of a hinge for attachment of a cradle (36) for a seat.

11. The mounting base (26) of claim 10, wherein each of the plurality of protrusions (35) has a hole (37) passing through it of the same size and sharing the same central axis, this hole (37) being provided for accepting a separable axle pin (40) for the removable attachment of the cradle (36).

12. The mounting base (26) according to claim 8 or 9, wherein the mounting base (26) forms an integral part of the box, basket or the like for fixing to the carrier top (2).

## Patentansprüche

1. Befestigungsbasis (26), insbesondere eine Sitzbasis, welche eine Schnittstelle zur entnehmbaren Befestigung von einem Sitz, einem Korb, einem Behälter oder dergleichen an einem Gepäckträger (1) bereitstellt, wobei die Basis (26) ein Verbindungsstück (54) enthält, welches bewegbar an der Unterseite von der Befestigungsbasis (26) angebracht ist, wobei das Verbindungsstück (54) Flansche enthält, welche sich entlang von zwei gegenüberliegenden Seiten erstrecken und dazu ausgelegt sind, mit Schienen oder Stangen, welche einen Teil des Gepäckträgers (1) ausbilden, gleitbar in Eingriff zu gelangen, wobei
das Verbindungsstück (54) derart bewegbar in der Befestigungsbasis (26) gehalten ist, dass es näher zur Basis (26) bewegt werden kann, um den Spalt zwischen den Flanschen und der Unterseite von der Basis (26) zu reduzieren,
wobei das Verbindungsstück (54) an seiner oberen Seite eine Mehrzahl von Erstreckungen enthält, welche dazu ausgelegt sind, innerhalb von einer Aussparung einzupassen, welche an der Unterseite von der Basis (26) bereitgestellt sind, wobei ferner
ein Langloch durch die Befestigungsbasis (26) in eine Richtung verläuft, welche parallel zu den Flanschen an dem Verbindungsstück (54) ausgerichtet ist, und wobei die Erstreckungen an dem Verbindungsstück (54) ferner durch den Bereich von diesem Langloch verlaufen, wenn das Verbindungsstück (54) innerhalb der unterseitigen Aussparung positioniert ist, und **dadurch gekennzeichnet, dass**
die Erstreckungen Löcher haben, welche zu dem Langloch ausgerichtet sind,
wobei die Befestigungsbasis (26) ferner eine längslaufende Keilschraube (55), welche innerhalb des Langloches in der Befestigungsbasis (26) positioniert ist, und ausgerichtete Löcher durch die Verbindungsstück-Erstreckungen enthält, wobei die Keilschraube (55) eine im Wesentlichen flache untere Basis und eine obere Seite mit einem variierenden Profil hat, so dass die Tiefe/Dicke von der Schraube (55) entlang von der Länge von der Schraube (55) mit einer bestimmten Häufigkeit zunimmt und abnimmt.

2. Befestigungsbasis (26) nach Anspruch 1, bei welcher die Keilschraube (55) ferner an einem Ende ein Schraubgewinde enthält, welches schraubbar mit einer Gewindemutter (56) in Eingriff bringbar ist, wobei die Gewindemutter an dem Eingang zu dem Langloch drehbar innerhalb von der Befestigungsbasis (26) gehalten ist, und wobei
die obere Seite von der Keilschraube (55) ein derartiges Profil hat, dass, wenn die Schraube (55) innerhalb des Langloches ist und durch die Löcher in den Erstreckungen von dem Verbindungsstück (54) eingeschraubt wird, die Bereiche einer schmaleren Tiefe mit jedem der Löcher durch die Erstreckungen von dem Verbindungsstück (54) ausgerichtet sind, und wobei ferner
wenn die Keilschraube (55) in das Langloch in eine Richtung parallel zu der Mittenachse von dem Loch bewegt wird, durch eine Umdrehung von der Gewindemutter (56) jene Bereiche einer dickeren Tiefe sich innerhalb der Löcher in den Erstreckungen von dem Verbindungsstück (54) bewegen und bewirken, dass sich das Verbindungsstück (54) weiter in die Aussparung an der unteren Seite von der Befestigungsbasis (26) bewegt.

3. Befestigungsbasis (26) nach Anspruch 2, bei welcher ein Schraubknauf (57) an der Gewindemutter (56) angebracht ist.

4. Befestigungsbasis (26) nach einem der Ansprüche 1 bis 3, wobei die Befestigungsbasis (26) ferner eine Sicherungsvorrichtung (58) an dem hinteren Ende von der Befestigungsbasis (26) enthält, wobei die Sicherungsvorrichtung (58) eine Mehrzahl von Streifen hat, welche von der Unterseite von der Befestigungsbasis (26) vorragen, wobei die Streifen innerhalb von der Befestigungsbasis (26) auf eine bewegbare Art und Weise befestigt sind, wobei
die Sicherungsvorrichtung (58) dazu ausgelegt ist, die Bewegung des Verbindungsstückes (54) innerhalb von der Befestigungsbasis (26) zu beenden, während die Streifen vorragen, und die Bewegung des Verbindungsstückes innerhalb von der Befestigungsbasis (26) zuzulassen, wenn die Streifen innerhalb von der Befestigungsbasis (26) sind.

5. Befestigungsbasis (26) nach Anspruch 4, abhängig von Anspruch 2, bei welcher die Sicherungsvorrichtung (58) die Umdrehung von der Gewindemutter (56) beendet, welche schraubbar mit der Keilschraube (55) in Eingriff bringbar ist.

6. Befestigungsbasis (26) nach Anspruch 4 oder 5, bei welcher die Sicherungsvorrichtung (58) ferner Streifen hat, welche von der oberen Seite von der Befestigungsbasis (26) vorragen, wenn die unteren Streifen vorragen, und wobei die oberen Streifen dazu ausgelegt sind, innerhalb von der Befestigungsbasis (26) gehalten zu werden, wenn die unteren Streifen innerhalb von der Befestigungsbasis (26) sind.

7. Befestigungsbasis (26) nach einem der vorhergehenden Ansprüche, wobei die Befestigungsbasis (26) mit einem Sicherungsschloss (28) bereitgestellt ist, welches auf eine drehbare Art und Weise an der Befestigungsbasis (26) befestigt ist, wobei das Sicherungsschloss (28) mit einer Erstreckung bereitgestellt ist, welche seitens der Befestigungsbasis (26) durchläuft, um mit einem nachgiebigen Element an dem unterseitigen Gepäckträger (1) derart in Eingriff zu gelangen, so dass verhindert wird, dass die Befestigungsbasis (26) vom Gepäckträger (1) abgleitet, ohne zunächst das Sicherungsschloss (28) zu umdrehen und die Erstreckung von dem nachgiebigen Element in dem Gepäckträger (1) zu trennen.

8. Befestigungsbasis (26) nach Anspruch 7, bei welchem das Sicherungsschloss (28) mit einer Gepäckträger-Oberseite (2) des Gepäckträgers (1) mittels Schwerkraft in Eingriff bringbar ist, welche es in Position zieht.

9. Befestigungsbasis (26) nach Anspruch 7, bei welcher das Sicherungsschloss (28) dazu ausgelegt ist, in die Ineingriffnahme-Position mit einer Gepäckträger-Oberseite (2) des Gepäckträgers (1) mittels einer Feder vorgespannt zu werden.

10. Befestigungsbasis (26) nach einem der vorhergehenden Ansprüche, bei welcher eine Mehrzahl von Vorsprüngen (35) bereitgestellt sind, welche sich von der Oberseite von der Befestigungsbasis (26) aus nach oben erstrecken, wobei diese Vorsprünge (35) an einem Ende von der Befestigungsbasis (26) derart geformt und angeordnet sind, dass sie eine Hälfte von einem Gelenk zur Befestigung von einer Aufnahme (36) für einen Sitz ausbilden.

11. Befestigungsbasis (26) nach Anspruch 10, bei welcher jeder der Mehrzahl von Vorsprüngen (35) ein Loch (37) hat, welches durch diesen bei gleicher Grösse durchläuft und die gleiche Mittenachse hat, wobei dieses Loch (37) zur Aufnahme eines entnehmbaren Achsbolzens (40) für die entnehmbare Befestigung von der Aufnahme (36) bereitgestellt ist.

12. Befestigungsbasis (26) nach Anspruch 8 oder 9, wobei die Befestigungsbasis (26) ein einstückiges Element von dem Behälter, Korb oder dergleichen zum Anbringen an die Gepäckträger-Oberseite (2) ausbildet.

## Revendications

1. Socle de montage (26), en particulier un socle de siège, fournissant une interface pour la fixation amovible d'un siège, d'un panier, d'un coffre ou similaire sur un porte-bagages (1), dans lequel le socle (26) comprend une pièce de raccordement (54) qui est fixée de manière mobile sur la face inférieure du socle de montage (26), la pièce de raccordement (54) comprenant des rebords s'étendant le long de deux côtés opposés et étant adaptés pour se mettre en prise de manière coulissante avec des rails ou des tiges faisant partie du porte-bagages (1), dans lequel :
la pièce de raccordement (54) est maintenue de manière mobile dans le socle de montage (26) de sorte qu'elle peut être rapprochée du socle (26) afin de réduire l'espace entre les rebords et la face inférieure du socle (26),
dans lequel la pièce de raccordement (54) comprend une pluralité d'extensions sur sa surface supérieure, qui sont adaptées pour s'ajuster à l'intérieur d'un évidement prévu sur la face inférieure du socle (26), de plus :
un trou longitudinal traverse le socle de montage (26) dans une direction parallèle aux rebords sur la pièce de raccordement (54), et les extensions sur la pièce de raccordement (54) traversent en outre la région de ce trou longitudinal lorsque la pièce de raccordement (54) est positionnée à l'intérieur de l'évidement de face inférieure, et **caractérisé en ce que** les extensions ont des trous qui s'alignent avec le trou longitudinal,
dans lequel le socle de montage (26) comprend en outre une vis de blocage longitudinale (55) qui est positionnée à l'intérieur du trou longitudinal dans le socle de montage (26) et des trous alignés à travers les extensions de pièce de raccordement, dans lequel :
la vis de blocage (55) a une base inférieure sensiblement plate et une surface supérieure à profil variable, de sorte que la profondeur/épaisseur de la vis (55) augmente ou diminue un certain nombre de fois le long de la longueur de la vis (55).

2. Socle de montage (26) selon la revendication 1, dans lequel la vis de blocage (55) comprend en outre un filetage de vis au niveau d'une extrémité, qui se met en prise par filetage avec un écrou (56), dans lequel l'écrou est maintenu en rotation à l'intérieur du socle de montage (26) à l'entrée dans le trou longitudinal, et dans lequel :
la surface supérieure de la vis de blocage (55) est profilée de sorte que lorsque la vis (55) est à l'intérieur du trou longitudinal et vissée à travers les trous dans les extensions de la pièce de raccordement (54), les régions d'épaisseur plus étroite s'alignent avec chacun des trous à travers les extensions de la pièce de raccordement (54), et de plus :
lorsque la vis de blocage (55) est déplacée dans le trou longitudinal dans une direction parallèle à l'axe central du trou, par la rotation de l'écrou (56), les régions de profondeur plus épaisse se déplacent à l'intérieur des trous dans les extensions de la pièce de raccordement (54) et amènent la pièce de raccordement (54) à se déplacer davantage à l'intérieur de l'évidement sur la face inférieure du socle de montage (26).

3. Socle de montage (26) selon la revendication 2, dans lequel une vis bouton (57) est fixée à l'écrou (56).

4. Socle de montage (26) selon l'une quelconque des revendications 1 à 3, dans lequel le socle de montage (26) comprend en outre un dispositif de sécurité (58) au niveau de l'extrémité arrière du socle de montage (26), le dispositif de sécurité (58) ayant une pluralité de languettes faisant saillie de la face inférieure du socle de montage (26), dans lequel les languettes sont fixées à l'intérieur du socle de montage (26) d'une manière mobile, dans lequel :
le dispositif de sécurité (58) est adapté pour arrêter le mouvement de la pièce de raccordement (54) à l'intérieur du socle de montage (26) alors que les languettes font saillie, et pour permettre le mouvement de la pièce de raccordement à l'intérieur du socle de montage (26) lorsque les languettes sont à l'intérieur du socle de montage (26).

5. Socle de montage (26) selon la revendication 4 dans la version dans laquelle elle dépend de la revendication 2, dans lequel le dispositif de sécurité (58) arrête la rotation de l'écrou (56) mis en prise par filetage avec la vis de blocage (55).

6. Socle de montage (26) selon la revendication 4 ou 5, dans lequel le dispositif de sécurité (58) a en outre des languettes qui font saillie de la surface supérieure du socle de montage (26) lorsque les languettes inférieures font saillie, et les languettes supérieures sont adaptées pour être maintenues à l'intérieur du socle de montage (26) lorsque les languettes inférieures sont à l'intérieur du socle de montage (26).

7. Socle de montage (26) selon l'une quelconque des revendications 1 à 6, dans lequel le socle de montage (26) est prévu avec un verrou de sécurité (28) qui est monté sur le socle de montage (26) d'une manière rotative, le verrou de sécurité (28) étant prévu avec une extension qui passe par le côté du socle de montage (26) pour être mise en prise avec une caractéristique élastique sur le porte-bagages (1) situé au-dessous, de sorte que l'on empêche le socle de montage (26) de glisser du porte-bagages (1) sans faire tourner dans un premier temps le verrou de sécurité (28) ni dégager l'extension de la caractéristique élastique dans le porte-bagages (1).

8. Socle de montage (26) selon la revendication 7, dans lequel le verrou de sécurité (28) peut se mettre en prise avec une partie supérieure de porte-bagages (2) du porte-bagages (1) au moyen de la gravité qui le tire en position.

9. Socle de montage (26) selon la revendication 7, dans lequel le verrou de sécurité (28) est adapté pour être sollicité dans la position de mise en prise avec une partie supérieure de porte-bagages (2) au moyen d'un ressort.

10. Socle de montage (26) selon l'une quelconque des revendications 1 à 9, dans lequel une pluralité de saillies (35) sont prévues en s'étendant vers le haut à partir du côté supérieur du socle de montage (26), ces saillies (35) étant formées et agencées au niveau d'une extrémité du socle de montage (26) afin de former une moitié d'une charnière pour la fixation d'un dispositif d'attache (36) pour un siège.

11. Socle de montage (26) selon la revendication 10, dans lequel chacune de la pluralité de saillies (35) a un trou (37) passant par celle-ci de même taille et partageant le même axe central, ce trou (37) étant prévu pour accepter une broche séparable (40) pour la fixation amovible du dispositif d'attache (36).

12. Socle de montage (26) selon la revendication 8 ou 9, dans lequel le socle de montage (26) fait partie intégrante du coffre, du panier ou similaire pour la fixation sur la partie supérieure de porte-bagages (2).
